# EUROPÄISCHE PATENTSCHRIFT

(11) **EP 3 446 602 B1**
(45) Veröffentlichungstag und Bekanntmachung des Hinweises auf die Patenterteilung: **07.10.2020**
(21) Anmeldenummer: 17187523.0
(22) Anmeldetag: 23.08.2017
(51) Int. Cl.: A47J 31/44

(54) **RESTWASSERBEHÄLTER FÜR EINE VORRICHTUNG ZUR GETRÄNKEBEREITUNG SOWIE VORRICHTUNG ZUR GETRÄNKEBEREITUNG**
RESIDUAL WATER CONTAINER FOR A DEVICE FOR BEVERAGE PREPARATION AND DEVICES FOR BEVERAGE PREPARATION
RÉSERVOIR D'EAU RÉSIDUELLE POUR UN DISPOSITIF DE PRÉPARATION DE BOISSONS AINSI QUE DISPOSITIF DE PRÉPARATION DE BOISSONS

(43) Veröffentlichungstag der Anmeldung: 27.02.2019
(73) Patentinhaber: JURA Elektroapparate AG, 4626 Niederbuchsiten (CH)
(72) Erfinder: RÜTTI, Pascal, 4623 Neuendorf (CH); BÜTTIKER, Philipp, 4625 Oberbuchsiten (CH)
(74) Vertreter: EGLI-EUROPEAN PATENT ATTORNEYS

(56) Entgegenhaltungen:
- EP-A1- 3 195 767
- WO-A1-2011/086087
- WO-A1-2013/108185
- DE-B3-102014 204 611

## Beschreibung

### Technisches Gebiet

Die vorliegende Erfindung bezieht sich auf einen Restwasserbehälter für eine Vorrichtung zur Getränkebereitung sowie eine Vorrichtung zur Getränkebereitung.

### Stand der Technik

In der DE 10 2010 007 143 A1 ist eine Kaffeemaschine mit einer Restwasserschale zum Auffangen von Restwasser offenbart. Die Restwasserschale besteht dabei aus einer nach oben offenen Schale, welche nur im vorderen Bereich, der sich unterhalb des Kaffeeauslasses und des Milchschaumauslasses befindet, durch einen Schalendeckel, der einen festen Bestandteil des Kaffeemaschinengehäuses bildet, abgedeckt ist. Der Anmelderin sind ferner Kaffeemaschinen bekannt, die einen Restwasserbehälter aufweisen, der eine Abdeckung aufweist, um zu verhindern, dass Restwasser aus der Schale in das Innere der Kaffeemaschine gelangt, beispielsweise indem Restwasser verdunstet und als Dampf in das Innere der Kaffeemaschine eindringt und dort Beschädigungen von feuchtigkeitsempfindlichen Bauteilen hervorruft. Die Abdeckung muss jedoch vor dem Entleeren der Schale in einem zusätzlichen Arbeitsschritt von der Schale abgenommen werden, um zu verhindern, dass das Restwasser beim Entleeren in unkontrollierbarer Weise durch den Spalt zwischen der Schale und der Abdeckung fliesst und es dadurch zu Verschmutzungen der Aussenseite des Restwasserbehälters kommt. Derartige Verschmutzungen müssten durch aufwendiges Reinigen und Trocknen des Restwasserbehälters entfernt werden.

Aus DE 102014204611 B3 ist ein Abtropfgitter bekannt, welches zur Verwendung in einer Kaffeemaschine vorgesehen ist und ausserdem als "Abstellfläche zum Abstellen von Behältnissen zur Getränkeaufnahme" dient, wobei das Abtropfgitter an einer Kaffeemaschine derart angeordnet werden kann, dass dieses Abtropfgitter über einem Restwasserbehälter angeordnet ist. Das Abtropfgitter ist aus drei Tragholmen und einer Vielzahl von Querträgern zusammengesetzt. Ein Teilbereich des Abtropfgitters, welcher sich zwischen zwei der Tragholme erstreckt, ist aus zwei Abschnitten ausgebildet, welche relativ zueinander um eine erste Achse verdreh- bzw. verschwenkbar sind, wobei einer der zwei Abschnitte derart mit den übrigen (ortsfest im Raum angeordneten) Teilen des Abtropfgitters verbunden ist, dass dieser eine der zwei Abschnitte um eine zweite Achse verdreh- bzw. verschwenkbar ist. Durch Schwenken des einen der zwei Abschnitte um die zweite Achse wird erreicht, dass der andere der zwei Abschnitte eine horizontal ausgerichtete Fläche bildet, welche (durch das Schwenken des einen der zwei Abschnitte um die zweite Achse) höhenverstellbar bezüglich der übrigen (ortsfest im Raum angeordneten) Teile des Abtropfgitters ist und deshalb eine höhenverstellbare Abstellfläche für Trinkgefässe bildet.

### Zusammenfassung der Erfindung

Eine der vorliegenden Erfindung zugrundeliegende Aufgabe besteht darin, die genannten Nachteile zu vermeiden sowie einen verbesserten Restwasserbehälter und eine verbesserte Vorrichtung zur Getränkebereitung bereitzustellen.

Diese Aufgabe wird gelöst durch einen Restwasserbehälter gemäss Patentanspruch 1 und eine Vorrichtung gemäss Patentanspruch 13. Weiterbildungen der Erfindung sind in den Unteransprüchen angegeben. Die in den Unteransprüchen zum Restwasserbehälter genannten Merkmale und die auf den Restwasserbehälter bezogenen, weiter unten in der Beschreibung angeführten Merkmale können auch als Weiterbildung der erfindungsgemässen Vorrichtung zur Getränkebereitung verstanden werden und umgekehrt.

Bei dem erfindungsgemässen Restwasserbehälter handelt es sich um einen Restwasserbehälter für eine Vorrichtung zur Getränkebereitung, welcher umfasst: eine Schale mit mindestens einem Innenraum zum Aufnehmen von Restwasser und mit einer Öffnung, welche von einem oberen Rand der Schale begrenzt ist; eine Abdeckung zum Abdecken eines ersten Teilbereichs der Öffnung der Schale und eine Klappe zum zeitweisen Abdecken eines zweiten Teilbereichs der Öffnung der Schale. Die Klappe ist relativ zur Schale um eine Schwenkachse schwenkbar, sodass die Klappe zwischen einem geschlossenen Zustand und einem geöffneten Zustand schwenkbar ist, wobei im geöffneten Zustand eine Ausgiessöffnung des Restwasserbehälters freigegeben ist, durch welche Ausgiessöffnung Restwasser über den oberen Rand der Schale ausgiessbar ist, und wobei im geschlossenen Zustand die Ausgiessöffnung geschlossen ist.

Bei Restwasser kann es sich um jede Art von zumindest teilweise flüssigen Abfällen, die beim Betrieb einer Vorrichtung zur Getränkebereitung anfallen, handeln. Neben Wasser können beispielsweise auch andere Flüssigkeiten, wie etwa flüssige Reinigungsmittel, oder Feststoffe, wie etwa Kaffeesud, im Restwasser enthalten sein. Restwasser fällt beispielsweise bei Spülvorgängen zum Reinigen von Bestandteilen der Vorrichtung zur Getränkebereitung an. Restwasser fällt beispielsweise auch an, wenn die Vorrichtung zur Getränkebereitung ein Getränk bereitet und über eine Auslassöffnung abgibt, ohne dass ein Trinkgefäss zum Auffangen des Getränks unterhalb der Auslassöffnung positioniert worden ist.

Bei Verwendung des erfindungsgemässen Restwasserbehälters ist es beispielsweise möglich, die Schale durch kontrolliertes Ausgiessen des darin befindlichen Restwassers durch den zweiten Teilbereich der Öffnung der Schale zu entleeren, ohne zuvor die Abdeckung von der Schale abzunehmen und ohne dass es zu Verschmutzungen der Aussenseite der Schale kommt. So kann der Bediener beispielsweise mit einer Hand den Restwasserbehälter der Vorrichtung zur Getränkebereitung entnehmen und durch Kippen des Restwasserbehälters entleeren, ohne die andere Hand gebrauchen zu müssen. Ferner ist es möglich, den erfindungsgemässen Restwasserbehälter zu entleeren, ohne dass es dabei zu Verschmutzungen der Aussenseite des Restwasserbehälters kommt. Durch den Einsatz des erfindungsgemässen Restwasserbehälters wird beispielsweise auch erreicht, dass der Bediener dem Anblick von möglichen Verschmutzungen im Inneren des Restwasserbehälters nicht ausgesetzt ist, wenn er den Restwasserbehälter entleert.

Bevorzugt weist die Klappe des Restwasserbehälters an einer dem mindestens einen Innenraum der Schale zugewandten Seite mindestens einen Vorsprung auf, wobei der mindestens eine Vorsprung mindestens eine erste Strömungsfläche aufweist, wobei die mindestens eine erste Strömungsfläche ausgebildet ist, beim Kippen des Restwasserbehälters um eine zur Schwenkachse zumindest teilweise parallele Kippachse von aus der Schale ausfliessendem Restwasser angeströmt zu werden, wodurch ein auf die Klappe wirkendes Drehmoment erzeugt wird, durch welches die Klappe geschwenkt wird oder durch welches das Schwenken der Klappe unterstützt wird.

"Zumindest teilweise parallel" bedeutet dabei, dass die Richtung der Kippachse eine zur Schwenkachse parallele Komponente aufweist bzw. zur Schwenkachse parallel ist.

Bevorzugt weist die Klappe an einer dem mindestens einen Innenraum der Schale zugewandten Seite mindestens einen Vorsprung auf, wobei der Vorsprung als Auftriebskörper ausgebildet ist.

Bevorzugt umfasst der Restwasserbehälter ferner mindestens ein Gegengewicht, wobei das mindestens eine Gegengewicht mit der Klappe verbunden ist und wobei das mindestens eine Gegengewicht bezüglich der Klappe und der Schwenkachse der Klappe derart angeordnet ist, dass das Gegengewicht ein auf die Klappe bezüglich der Schwenkachse der Klappe wirkendes Drehmoment erzeugt, welches ein entsprechendes (d.h. auf die Klappe bezüglich der Schwenkachse der Klappe wirkendes), von einer Gewichtskraft der Klappe erzeugtes Drehmoment zumindest teilweise kompensiert.

Bevorzugt weist das mindestens eine Gegengewicht mindestens eine zweite Strömungsfläche auf, wobei die mindestens eine zweite Strömungsfläche ausgebildet ist, beim Kippen des Restwasserbehälters um eine zur Schwenkachse zumindest teilweise parallele Kippachse von aus der Schale ausfliessendem Restwasser angeströmt zu werden, wodurch ein auf die Klappe wirkendes Drehmoment erzeugt wird, durch welches die Klappe geschwenkt wird oder durch welches das Schwenken der Klappe unterstützt wird.

Bevorzugt weist die Abdeckung eine vorzugsweise als Rost ausgebildete Plattform zum Abstellen von Trinkgefässen auf, wobei mehr bevorzugt die Plattform an einer der Klappe gegenüberliegenden Seite der Abdeckung angeordnet ist.

Bevorzugt weist die Schale einen Boden und eine Seitenwand auf, wobei die Seitenwand zumindest in einem Teilbereich schräg zum Boden verlaufend ausgebildet ist.

Bevorzugt liegt der mindestens eine Vorsprung einem Teilbereich der Seitenwand, in dem die Seitenwand schräg zum Boden verlaufend ausgebildet ist, gegenüber.

Bevorzugt ist die Abdeckung mit der Schale verbunden, wobei mehr bevorzugt die Abdeckung mit der Schale lösbar verbunden ist, wobei insbesondere bevorzugt die Abdeckung mit der Schale kraftschlüssig und/oder formschlüssig verbunden ist.

Bevorzugt ist die Klappe an der Abdeckung über mindestens ein Scharnier schwenkbar angebracht.

Die erfindungsgemässe Vorrichtung zur Getränkebereitung umfasst eine Getränkezubereitungseinheit und einen erfindungsgemässen Restwasserbehälter.

Bevorzugt ist der Restwasserbehälter der Vorrichtung entnehmbar, wobei der Restwasserbehälter zum Entnehmen mehr bevorzugt aus der Vorrichtung in einer im Wesentlichen horizontalen Richtung herausgezogen werden kann.

Bevorzugt ist der Restwasserbehälter im Betriebszustand der Vorrichtung im unteren Bereich der Vorrichtung angeordnet und/oder die Vorrichtung weist mindestens eine Getränkeauslassöffnung, unterhalb welcher die Abdeckung eine Plattform zum Abstellen von Trinkgefässen aufweist.

Bevorzugt ist die erfindungsgemässe Vorrichtung zur Getränkebereitung eine Kaffeemaschine, mehr bevorzugt eine Kaffeemaschine zum Bereiten von Espresso und/oder Cappuccino, noch mehr bevorzugt ein Kaffeevollautomat, insbesondere ein Kaffeevollautomat zum Bereiten von Espresso und/oder Cappuccino.

### Kurze Beschreibung der Zeichnungen

Weitere Einzelheiten und Zweckmässigkeiten der Erfindung sowie insbesondere beispielhafte Ausführungsformen des erfindungsgemässen Restwasserbehälters und der erfindungsgemässen Vorrichtung zur Getränkebereitung werden im Folgenden unter Bezugnahme auf die beigefügten Zeichnungen beschrieben. Die einzelnen Merkmale der Ausführungsformen können, soweit sinnvoll, beliebig miteinander kombiniert werden.
- Fig. 1: zeigt ein eine Schrägansicht eines Restwasserbehälters gemäss einer ersten Ausführungsform der vorliegenden Erfindung.
- Fig. 2: zeigt eine schematische Schnittdarstellung des Restwasserbehälters gemäss der ersten Ausführungsform in einem geschlossenen Zustand.
- Fig. 3: zeigt eine schematische Schnittdarstellung des Restwasserbehälters gemäss der ersten Ausführungsform in einem geöffneten Zustand.
- Fig. 4: zeigt eine schematische Schnittdarstellung des Restwasserbehälters gemäss der ersten Ausführungsform im geöffneten Zustand, wobei der Restwasserbehälter weiter geöffnet ist als in der in Fig. 3 dargestellten Situation.
- Fig. 5: zeigt eine schematische Schnittdarstellung eines Restwasserbehälters gemäss einer zweiten Ausführungsform der Erfindung in einem geschlossenen Zustand.
- Fig. 6: zeigt eine schematische Schnittdarstellung des Restwasserbehälters gemäss der zweiten Ausführungsform in einem geöffneten Zustand.
- Fig. 7: zeigt eine schematische Schnittdarstellung des Restwasserbehälters gemäss der zweiten Ausführungsform im geöffneten Zustand, wobei der Restwasserbehälter weiter geöffnet ist als in der in Fig. 6 dargestellten Situation.
- Fig. 8: zeigt eine schematische Schnittdarstellung eines Restwasserbehälters gemäss einer dritten Ausführungsform der Erfindung in einem geschlossenen Zustand.
- Fig. 9: zeigt eine schematische Schnittdarstellung des Restwasserbehälters gemäss der dritten Ausführungsform in einem geöffneten Zustand.
- Fig. 10: zeigt eine schematische Schnittdarstellung des Restwasserbehälters gemäss der dritten Ausführungsform im geöffneten Zustand, wobei der Restwasserbehälter weiter geöffnet ist als in der in Fig. 9 dargestellten Situation.

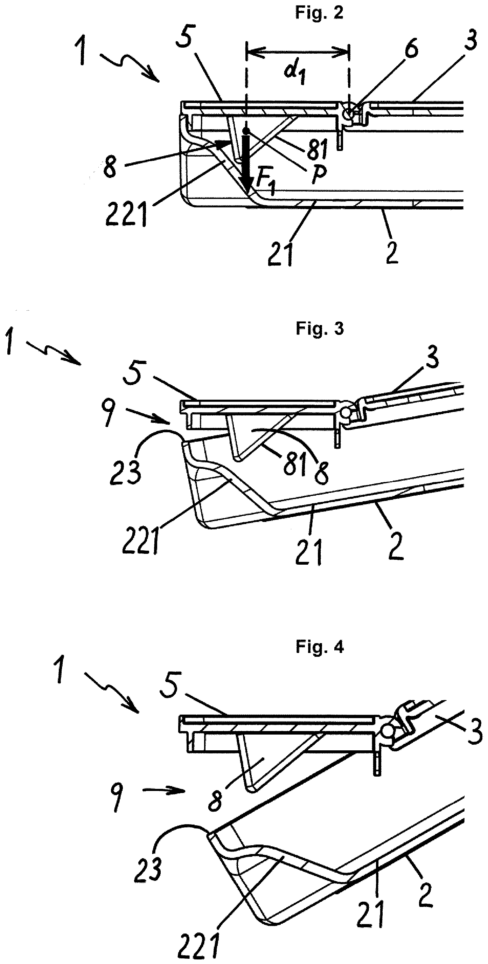

Der Übersichtlichkeit halber ist in den Figuren 2 bis 10 jeweils nur der hintere Bereich des Restwasserbehälters dargestellt.

### Beschreibung von Ausführungsformen

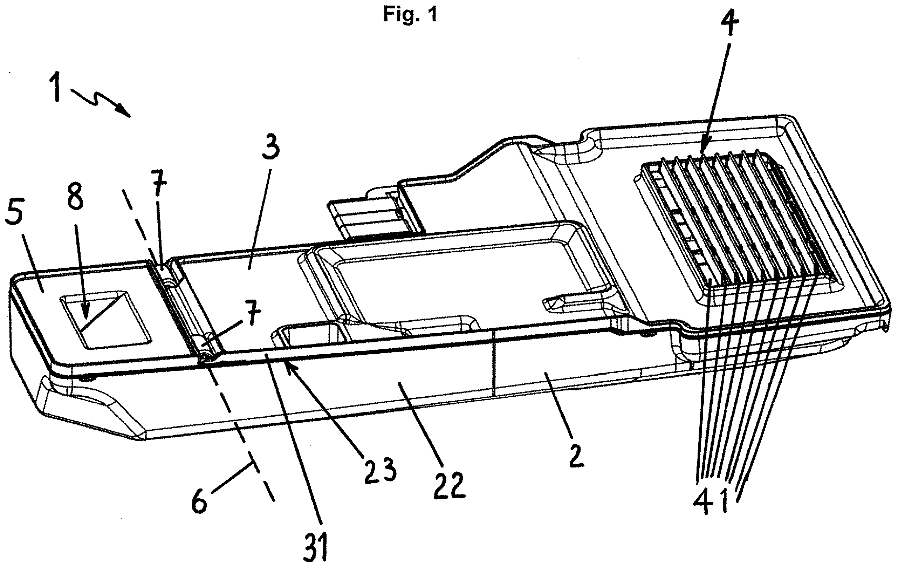

In Fig. 1 ist eine Schrägansicht eines Restwasserbehälters 1 für eine Vorrichtung zur Getränkebereitung gemäss einer ersten Ausführungsform der vorliegenden Erfindung dargestellt. Der Restwasserbehälter 1 umfasst eine Schale 2 zum Aufnehmen von Restwasser. Die Schale 2 ist nach oben offen ausgebildet, d.h. sie weist einen Boden 21, eine Seitenwand 22 und eine Öffnung auf, die im Betriebszustand nach oben weist. Die Öffnung ist vom oberen Rand 23 der Schale 2 begrenzt.

Am oberen Rand 23 der Schale 2 ist eine Abdeckung 3 angeordnet. Bevorzugt sind die Schale 2 und die Abdeckung 3 miteinander kraft- und/oder formschlüssig verbunden, beispielsweise indem der Rand 31 der Abdeckung 3 auf den oberen Rand 23 der Schale 2 aufgesteckt ist. Es ist im Rahmen der Erfindung auch möglich, dass die Schale 2 und die Abdeckung 3 miteinander verklebt sind oder dass die Schale 2 und die Abdeckung 3 einstückig ausgebildet sind. Die Abdeckung 3 weist eine Plattform 4 auf. Im Betrieb ist der Restwasserbehälter 1 bevorzugt so in eine Vorrichtung zur Getränkebereitung wie beispielsweise eine Kaffeemaschine eingesetzt, dass auf der Plattform 4 ein Trinkgefäss unterhalb einer Auslassöffnung für bereitete Getränke aufgestellt werden kann. Die Plattform 4 weist dabei Schlitze 41 und/oder Löcher und/oder andere flüssigkeitsdurchlässige Öffnungen auf. Bevorzugt ist die Plattform als Rost ausgebildet. Durch die Schlitze 41 gelangt Flüssigkeit, die von der Vorrichtung zur Getränkebereitung über die Auslassöffnung abgegeben wird, in die Schale 2, wenn kein Trinkgefäss unterhalb der Auslassöffnung aufgestellt ist.

Im Rahmen der vorliegenden Anmeldung wird die Bezeichnung "vorderer Bereich" für den Bereich des Restwasserbehälters 1 bzw. der Abdeckung 3 verwendet, in dem die Plattform 4 angeordnet ist. Es ist dies in Fig. 1 der rechte Bereich des Restwasserbehälters 1 bzw. der Abdeckung 3. Entsprechend wird die die Bezeichnungen "hinten" und "hinter Bereich" für die gegenüberliegende Seite bzw. den gegenüberliegenden Bereich verwendet. Es ist dies in Fig. 1 der linke Bereich des Restwasserbehälters 1 bzw. der Abdeckung 3.

Am oberen Rand 23 der Schale 2 ist ferner eine Klappe 5 angeordnet. Die Klappe 5 ist im hinteren Bereich der Abdeckung 3 angeordnet. Die Klappe 5 ist relativ zur Schale 2 um eine Schwenkachse 6 schwenkbar. Dies wird gemäss der ersten Ausführungsform dadurch erreicht, dass die Klappe 5 mit der Abdeckung 3 über zwei als Gelenke dienende Scharniere 7 drehbar verbunden ist. In einer alternativen Ausführungsform ist die Klappe 5 nicht mit der Abdeckung 3 sondern mit der Schale 2 über Gelenke drehbar verbunden.

Die Klappe 5 ist zwischen einem geschlossenen Zustand und einem geöffneten Zustand schwenkbar. In Fig. 1 ist der geschlossene Zustand dargestellt. Im geschlossenen Zustand decken die Abdeckung 3 und die Klappe 5 im Wesentlichen die gesamte Öffnung der Schale 2 ab.

In den Figuren 2 bis 4 ist eine schematische Schnittdarstellung des Restwasserbehälters 1 gemäss der ersten Ausführungsform gezeigt, wobei in Fig. 2 ebenfalls der geschlossene Zustand dargestellt ist und in den Figuren 3 und 4 ein geöffneter Zustand dargestellt ist.

Wie anhand von Fig. 2 erkennbar, weist die Klappe 5 auf der dem Innenraum der Schale 2 zugewandten Seite einen Vorsprung 8 mit einer ersten Strömungsfläche 81 auf. Zum Entleeren wird der Restwasserbehälter 1 nach hinten gekippt. Dazu wird der Restwasserbehälter 1 um eine Kippachse, die zur Schwenkachse zumindest teilweise parallel ist, so gekippt, dass der vordere Bereich des Restwasserbehälters 1 angehoben und der hintere Bereich des Restwasserbehälters 1 abgesenkt wird.

In Fig. 3 ist eine Situation dargestellt, in der der Restwasserbehälters 1 im Vergleich zu der in Fig. 2 dargestellten Situation nach hinten gekippt ist. In Fig. 4 ist eine Situation dargestellt, in der der Restwasserbehälters 1 noch weiter nach hinten gekippt ist als in der in Fig. 3 dargestellten Situation. Fig. 3 und Fig. 4 zeigen Situationen, in denen Restwasser (nicht in den Figuren dargestellt) aus dem Restwasserbehälter 1 ausgegossen wird.

In der Schale 2 befindliches Restwasser folgt beim Kippen des Restwasserbehälters 1 der Schwerkraft und fliesst in Richtung des hinteren Bereichs der Schale 2. Dabei wird die erste Strömungsfläche 81 von Restwasser angeströmt. Durch das Anströmen der ersten Strömungsfläche wird eine auf die erste Strömungsfläche 81 wirkende Kraft F₂ aufgebaut. Das Aufbauen der Kraft F₂ ist in dem Sinn dynamisch, als dass die Kraft F₂ dann aufgebaut wird, wenn die erste Strömungsfläche 81 von Restwasser angeströmt wird. Durch die Kraft F₂ wird ein Drehmoment M₂ erzeugt. Dieses Drehmoment M₂ kompensiert das von der Gewichtskraft F₁ der Klappe 5 erzeugte Drehmoment M₁ = d₁ × F₁ zumindest zeitweilig und zumindest teilweise und unterstützt oder bewirkt so ein Schwenken der Klappe 5; d₁ ist dabei der Abstand des Schwerpunkts P der Klappe 5 von der Schwenkachse 6. Diese Wirkung wird gemäss der ersten Ausführungsform dadurch erheblich verstärkt, dass die Seitenwand 22 zumindest in einem Teilbereich 221 im hinteren Bereich des Restwasserbehälters 1 schräg zum Boden 21 verläuft und die erste Strömungsfläche 81 dem schrägen Bereich (d.h. im Teilbereich 221) der Seitenwand 22 gegenüberliegend angeordnet ist. Das Restwasser wird durch den schrägen Bereich beim Kippen des Restwasserbehälters 1 der ersten Strömungsfläche 81 zugeführt. Für den erfindungsgemässen Restwasserbehälter 1 ist es aber nicht zwingend erforderlich, die Seitenwand 22 in einem Teilbereich schräg auszuführen.

Es ist bevorzugt, dass das von der Gewichtskraft F₁ der Klappe 5 erzeugte Drehmoment M₁ durch das von der Kraft F₂ erzeugte Drehmoment M₂ vollständig kompensiert wird und dass daher allein durch das von der Kraft F₂ erzeugte Drehmoment M₂ ein Schwenken der Klappe 5 relativ zur Schale 2 um die Schwenkachse 6 bewirkt wird und so eine Ausgiessöffnung 9, durch die Restwasser über den oberen Rand 23 der Schale 2 aus dem Restwasserbehälter 1 fliessen kann, freigegeben wird. Es kann im Rahmen der Erfindung auch vorgesehen sein, dass das von der Gewichtskraft F₁ der Klappe 5 erzeugte Drehmoment M₁ durch das von der Kraft F₂ erzeugte Drehmoment M₂ nur teilweise kompensiert wird.

In der in Fig. 3 dargestellten Situation ist die Klappe 5 im Vergleich zu der in Fig. 2 dargestellten Situation geschwenkt und befindet sich in einem geöffneten Zustand, in dem die Ausgiessöffnung 9 freigegeben ist. In der in Fig. 4 dargestellten Situation ist die Klappe 5 weiter geschwenkt und daher die Ausgiessöffnung 9 grösser als in der in Fig. 3 dargestellten Situation.

Wenn sich in der Schale 2 eine ausreichende Menge Restwasser befindet, sodass der Vorsprung 8 beim Kippen des Restwasserbehälters 1 in das Restwasser eintaucht, wirkt auf den Vorsprung aufgrund des archimedischen Prinzips eine Auftriebskraft. Die Auftriebskraft erzeugt ein zusätzliches Drehmoment, welches das von der Gewichtskraft F₁ der Klappe 5 erzeugte Drehmoment zumindest teilweise kompensiert und so das Schwenken der Klappe 5 unterstützt oder bewirkt. Die Stärke der Auftriebskraft hängt dabei insbesondere von der Grösse des Vorsprungs 8 (welche massgeblich die Menge des jeweils vom Vorsprung 8 verdrängten Restwassers bestimmt) ab.

Wenn sich in der Schale 2 eine noch grössere Menge Restwasser befindet, ist es möglich, dass der Vorsprung 8 bereits vor dem Kippen des Restwasserbehälters 1 in das Restwasser eintaucht und eine entsprechende Auftriebskraft erzeugt wird. Dabei sollte durch entsprechende Wahl der Grösse des Vorsprungs 8 und der Anordnung des Vorsprungs 8 bezüglich der Schale 2 vermieden werden, dass die Klappe 5 allein aufgrund eines von der Auftriebskraft erzeugten Drehmoments geschwenkt wird und sich die Klappe 5 selbsttätig öffnet, ohne dass der Restwasserbehälters 1 gekippt wird. Dies sollte zumindest so lange sichergestellt sein, solange eine vorgegebene maximale Füllhöhe der Schale nicht überschritten wird.

Es ist allgemein bevorzugt, wenn keine Verschlussmittel erforderlich sind, um zu verhindern, dass sich die Klappe 5 ohne Kippen des Restwasserbehälters 1 öffnet. Dadurch wird nicht nur die Konstruktion des Restwasserbehälters 1, sondern auch die Handhabung des Restwasserbehälters 1 beim Entleeren vereinfacht, da der Bediener auf keine Verschlussmittel einwirken muss, um ein Öffnen der Klappe 5 zu ermöglichen.

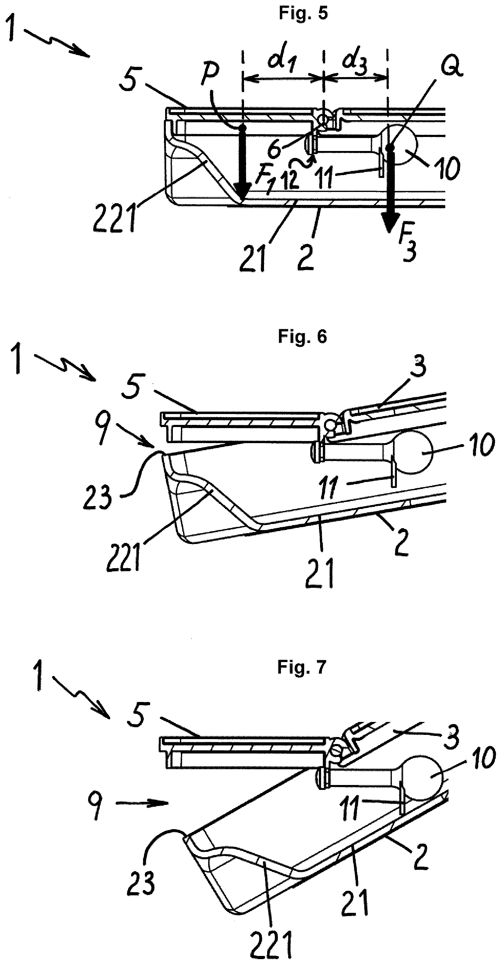

In den Figuren 5 bis 7 ist der Restwasserbehälters 1 gemäss einer zweiten Ausführungsform der Erfindung dargestellt.

Die zweite Ausführungsform unterscheidet sich von der oben beschriebenen ersten Ausführungsform darin, dass gemäss der zweiten Ausführungsform die Klappe 5 keinen Vorsprung 8 mit einer ersten Strömungsfläche 81 aufweist. Der Restwasserbehälter 1 gemäss der zweiten Ausführungsform weist stattdessen ein Gegengewicht 10 auf. Das Gegengewicht ist mit der Klappe 5 verbunden. Die Gewichtskraft des Gegengewichts F₃ erzeugt ein Drehmoment M₃= d₃ × F₃; d₃ ist dabei der Abstand des Schwerpunkts Q des Gegengewichts von der Schwenkachse 6. Dieses Drehmoment M₃ kompensiert das von der Gewichtskraft F₁ der Klappe 5 erzeugte Drehmoment d₁ × F₁ zumindest teilweise.

In einer bevorzugten konkreten Ausführungsform kompensiert das Drehmoment d₃ × F₃ das Drehmoment d₁ × F₁ so, dass der Betrag von d₃ × F₃ und der Betrag von d₁ × F₁im Wesentlichen gleich gross sind. Das Gegengewicht 10 hält dann die Klappe 5 in einer zur Waagrechten im Wesentlichen gleichbleibenden Lage. Wenn der Restwasserbehälter 1 nach hinten gekippt wird, verbleibt die Klappe 5 in ihrer ursprünglichen Lage. Dadurch wird beim Kippen des Restwasserbehälters 1 im Ergebnis ein Schwenken der Klappe 5 relativ zur Schale 2 bewirkt.

In einer alternativen konkreten Ausführungsform wird das Drehmoment d₁ × F₁ vom Drehmoment d₃ × F₃ nur teilweise kompensiert. In diesem Fall wird durch das Drehmoment d₃ × F₃ alleine kein Schwenken der Klappe 5 relativ zur Schale 2 bewirkt, wenn der Restwasserbehälter 1 nach hinten gekippt wird. Es muss dann allerdings nur noch ein geringes Drehmoment ΔM = |F₃ × d₃|- |F₁ × d₁| aufgebracht werden, um die Klappe 5 zu schwenken. Das Schwenken der Klappe 5 ist dann entsprechend erleichtert. ΔM kann beispielsweise von der Kraft, mit dem das Restwasser beim Kippen des Restwasserbehälters 1 nach hinten gegen die Klappe 5 drückt, erzeugt werden.

Optional weist das Gegengewicht 10 eine zweite Strömungsfläche 11 auf. Wenn beim Kippen des Restwasserbehälters 1 die zweite Strömungsfläche 11 angeströmt wird, wird eine Kraft auf die zweite Strömungsfläche 11 übertragen, durch welche ein weiteres Drehmoment M₄ erzeugt wird. Das Drehmoment M₄ trägt zur Kompensation des von der Gewichtskraft F₁ der Klappe 5 erzeugten Drehmoments d₁ × F₁ bei. Die Verbindung 12 des Gegengewichts 10 mit der Klappe 5 ist dabei in geeigneter Weise relativ zur Schwenkachse 6 so angeordnet, dass M₄ zur Kompensation des von der Gewichtskraft F₁ erzeugten Drehmoments M₁ beiträgt. In der in Fig. 5 dargestellten Situation wird dies beispielsweise dadurch realisiert, dass sich die Verbindung 12 auf der dem Gegengewicht 10 abgewandten Seite des Schwenkachse 6, d.h. in der Figur links von der Schwenkachse 6, befindet. Bei der Verbindung 12 kann es sich beispielsweise um eine Steck- und/oder Klebeverbindung handeln.

In der in Fig. 6 dargestellten Situation ist die Klappe 5 im Vergleich zu der in Fig. 5 dargestellten Situation geschwenkt und befindet sich in einem geöffneten Zustand, in dem eine Ausgiessöffnung 9, durch die Restwasser über den oberen Rand 23 der Schale aus dem Restwasserbehälter 1 fliessen kann, freigegeben ist. In der in Fig. 7 dargestellten Situation ist die Klappe 5 weiter geöffnet und daher die Ausgiessöffnung 9 grösser als in der in Fig. 6 dargestellten Situation. Fig. 6 und Fig. 7 zeigen Situationen, in denen Restwasser (nicht in den Figuren dargestellt) aus dem Restwasserbehälter 1 ausgegossen wird. Sobald das Gegengewicht 10 bzw. die zweite Strömungsfläche 11 am Boden 21 der Schale 2 anstösst, wird die Klappe 5 durch weiteres Kippen des Restwasserbehälters 1 nach hinten nicht mehr weiter geschwenkt; die Ausgiessöffnung 9 hat dann ihre maximale Grösse erreicht.

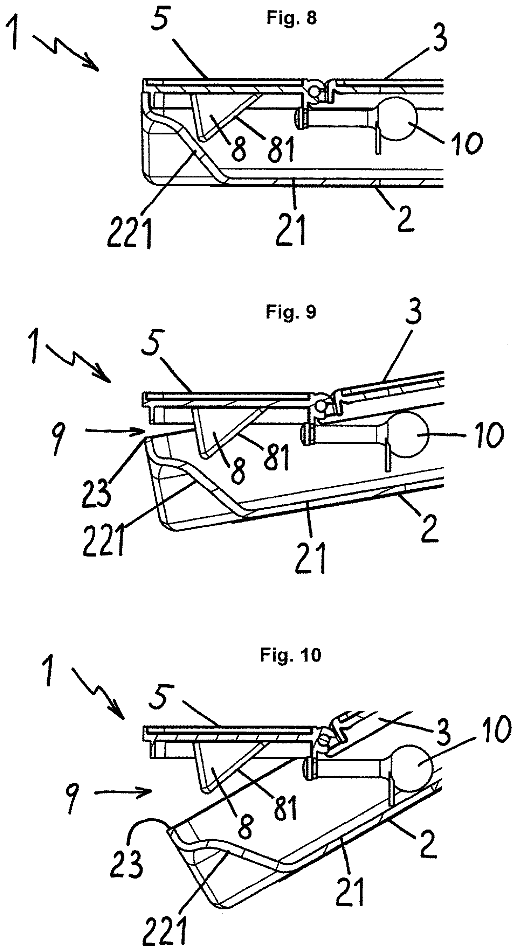

In den Figuren 8 bis 10 ist der Restwasserbehälter 1 gemäss einer dritten Ausführungsform, nach der die erste und die zweite Ausführungsform miteinander kombiniert werden, dargestellt.

Der Restwasserbehälter 1 gemäss der dritten Ausführungsform weist sowohl eine Klappe 5 mit einem Vorsprung 8 und einer ersten Strömungsfläche 81 als auch ein Gegengewicht 10 auf. Zur Beschreibung der Funktionsweise des Vorsprungs 8 und der ersten Strömungsfläche 81 bzw. des Gegengewichts 10 und der optionalen zweiten Strömungsfläche 11 wird auf obenstehende Ausführungen zur ersten und zweiten Ausführungsform verwiesen.

Der erfindungsgemässe Restwasserbehälter 1 kann in eine Vorrichtung zur Getränkebereitung eingesetzt werden. Dazu wird der Restwasserbehälter 1 bevorzugt in ein im unteren Bereich der Vorrichtung zur Getränkebereitung vorgesehenes Fach eingeschoben. Restwasser, das bei der Getränkebereitung oder der Reinigung der Vorrichtung zur Getränkebereitung anfällt, gelangt zumindest teilweise in den Restwasserbehälter 1. Von Zeit zu Zeit muss der Restwasserbehälter 1 entleert werden. Dazu wird der Restwasserbehälter 1 von der Vorrichtung getrennt. Dies erfolgt bevorzugt, indem er aus der Vorrichtung zur Getränkebereitung herausgezogen und dabei in im Wesentlichen horizontaler Lage gehalten wird. Zum Entleeren wird der Restwasserbehälter 1 nach hinten gekippt, indem der vordere Bereich des Restwasserbehälters 1 angehoben und der hintere Bereich des Restwasserbehälters 1 abgesenkt wird. Dazu kann der Bediener den Restwasserbehälter 1 mit einer Hand halten. Wie obenstehend beschrieben wird beim Kippen des Restwasserbehälters 1 die Klappe 5 automatisch relativ zur Schale 2 um die Schwenkachse 6 geschwenkt und eine Ausgiessöffnung 9 automatisch freigegeben. Das Restwasser kann nun in kontrollierter Weise ausgegossen werden. Wenn der Restwasserbehälter 1 nach dem Ausgiessen des Restwassers wieder in eine im Wesentlichen horizontale Lage zurückgekippt wird, wird die Klappe 5 durch ihre Gewichtskraft F₁ wieder automatisch zurückgeschwenkt und die Ausgiessöffnung 9 wieder geschlossen. Der Restwasserbehälter 1 kann nun wieder in die Vorrichtung zur Getränkeherstellung eingesetzt werden.

Optional weist der Restwasserbehälter 1 bevorzugt in seinem vorderen Bereich eine Griffstruktur auf, um dem Bediener das Einsetzen in die Vorrichtung zur Getränkebereitung, das Herausziehen aus derselben sowie das Entleeren des Restwasserbehälters 1 zu erleichtern.

Die einzelnen Bauteile des Restwasserbehälters 1 bestehen aus geeigneten Materialen. Die Schale 2, die Abdeckung 3 und die Klappe 5 bestehen bevorzugt aus einem Kunststoffmaterial und/oder aus einem Metall, bevorzugt einem Metallblech.

## Patentansprüche

1. Restwasserbehälter (1) für eine Vorrichtung zur Getränkebereitung, umfassend:
eine Schale (2) mit mindestens einem Innenraum zum Aufnehmen von Restwasser und mit einer Öffnung, welche von einem oberen Rand (23) der Schale begrenzt ist,
eine Abdeckung (3) zum Abdecken eines ersten Teilbereichs der Öffnung der Schale (2) und
eine Klappe (5) zum zeitweisen Abdecken eines zweiten Teilbereichs der Öffnung der Schale (2),
wobei die Klappe (5) relativ zur Schale (2) um eine Schwenkachse (6) schwenkbar ist,
**dadurch gekennzeichnet dass**
die Klappe (5) zwischen einem geschlossenen Zustand und einem geöffneten Zustand schwenkbar ist,
wobei im geöffneten Zustand eine Ausgiessöffnung (9) des Restwasserbehälters freigegeben ist, durch welche Ausgiessöffnung (9) Restwasser über den oberen Rand (23) der Schale (2) ausgiessbar ist, und
wobei im geschlossenen Zustand die Ausgiessöffnung (9) geschlossen ist.

2. Restwasserbehälter (1) gemäss Anspruch 1,
wobei die Klappe (3) an einer dem mindestens einen Innenraum der Schale (2) zugewandten Seite mindestens einen Vorsprung (8) aufweist,
wobei der mindestens eine Vorsprung(8) mindestens eine erste Strömungsfläche (81) aufweist,
wobei die mindestens eine erste Strömungsfläche (81) ausgebildet ist, beim Kippen des Restwasserbehälters (1) von aus der Schale (2) ausfliessendem Restwasser angeströmt zu werden und dadurch ein auf die Klappe (5) wirkendes Drehmoment zu erzeugen.

3. Restwasserbehälter (1) gemäss Anspruch 1 oder 2,
wobei die Klappe (5) an einer dem mindestens einen Innenraum der Schale (2) zugewandten Seite mindestens einen Vorsprung (8) aufweist, und
wobei der Vorsprung (8) als Auftriebskörper ausgebildet ist.

4. Restwasserbehälter (1) gemäss einem der Ansprüche 1-3, ferner umfassend mindestens ein Gegengewicht (10),
wobei das mindestens eine Gegengewicht (10) mit der Klappe (5) verbunden ist und
wobei das mindestens eine Gegengewicht (10) bezüglich der Klappe (5) und der Schwenkachse (6) der Klappe (5) derart angeordnet ist, dass das Gegengewicht (10) ein auf die Klappe (5) bezüglich der Schwenkachse (6) der Klappe wirkendes Drehmoment (F₃ x d₃) erzeugt, welches ein entsprechendes, von einer Gewichtskraft (F1) der Klappe (5) erzeugtes Drehmoment (F₁ x d₁) zumindest teilweise kompensiert.

5. Restwasserbehälter (1) gemäss Anspruch 4,
wobei das mindestens eine Gegengewicht (10) mindestens eine zweite Strömungsfläche (11) aufweist,
wobei die mindestens eine zweite Strömungsfläche (11) ausgebildet ist, beim Kippen des Restwasserbehälters (1) von aus der Schale (2) ausfliessendem Restwasser angeströmt zu werden und dadurch ein auf die Klappe (5) wirkendes Drehmoment zu erzeugen.

6. Restwasserbehälter (1) gemäss einem der Ansprüche 1-5, wobei die Abdeckung(3) eine Plattform (4) zum Abstellen von Trinkgefässen aufweist.

7. Restwasserbehälter (1) gemäss Anspruch 6,
wobei die Plattform (4) an einer der Klappe (5) gegenüberliegenden Seite der Abdeckung (3) angeordnet ist.

8. Restwasserbehälter (1) gemäss einem der Ansprüche 1-7,
wobei die Schale (2) einen Boden (21) und eine Seitenwand (22) aufweist,
wobei die Seitenwand (22) zumindest in einem Teilbereich (221) schräg zum Boden verlaufend ausgebildet ist.

9. Restwasserbehälter (1) gemäss einem der Ansprüche 2 bis 3,
wobei die Schale (2) einen Boden (21) und eine Seitenwand (22) aufweist,
wobei die Seitenwand (22) zumindest in einem Teilbereich (221) schräg zum Boden verlaufend ausgebildet ist und wobei der mindestens eine Vorsprung (8) dem Teilbereich (221) der Seitenwand (22), in dem die Seitenwand (22) schräg zum Boden (21) verlaufend ausgebildet ist, gegenüberliegt.

10. Restwasserbehälter (1) gemäss einem der Ansprüche 1-9,
wobei die Abdeckung (3) mit der Schale (2) lösbar verbunden ist.

11. Restwasserbehälter (1) gemäss Anspruch 10,
wobei die Abdeckung (3) mit der Schale (2) kraftschlüssig und/oder formschlüssig verbunden ist.

12. Restwasserbehälter (1) gemäss einem der Ansprüche 1-11,
wobei die Klappe (5) an der Abdeckung (3) über mindestens ein Scharnier (7) schwenkbar angebracht ist.

13. Vorrichtung zur Getränkebereitung umfassend eine Getränkezubereitungseinheit und
einen Restwasserbehälter (1) gemäss einem der Ansprüche 1-12.

14. Vorrichtung gemäss Anspruch 13,
wobei der Restwasserbehälter (1) der Vorrichtung entnehmbar ist.

15. Vorrichtung gemäss einem der Ansprüche 13 bis 14,
wobei in einem Betriebszustand der Vorrichtung der Restwasserbehälter (1) in einem unteren Bereich der Vorrichtung angeordnet ist und/oder
wobei die Vorrichtung mindestens eine Getränkeauslassöffnung aufweist, unterhalb welcher die Abdeckung (3) eine Plattform (4) zum Abstellen von Trinkgefässen aufweist.

16. Vorrichtung gemäss einem der Ansprüche 13 bis 15,
wobei die Vorrichtung eine Kaffeemaschine, eine Kaffeemaschine zum Bereiten von Espresso und/oder Cappuccino, ein Kaffeevollautomat oder ein Kaffeevollautomat zum Bereiten von Espresso und/oder Cappuccino ist.

## Claims

1. Residual water container (1) for an apparatus for beverage preparation comprising:
a dish (2) having at least one interior for receiving residual water and having an opening which is delimited by an upper edge (23) of the dish,
a cover (3) for covering a first partial region of the opening of the dish (2) and a flap (5) for temporary covering of a second partial region of the opening of the dish (2), wherein the flap (5) is pivotable relative to the dish (2) about a pivot axis (6),
**characterized in that**
the flap (5) is pivotable between a closed state and an open state, wherein in the open state a pouring opening (9) of the residual water container is exposed through which pouring opening (9) residual water can be poured out over the upper edge (23) of the dish (2) and wherein in the closed state the pouring opening (9) is closed.

2. The residual water container (1) according to claim 1, wherein the flap (3) has at least one projection (8) on a side facing the at least one interior of the dish (2), wherein the at least one projection (8) has at least one first flow surface (81), wherein the at least one first flow surface (81) is configured to have residual water flowing out of the dish (2) when tilting the residual water container (1) flowing onto it and thereby producing a torque acting on the flap (5).

3. The residual water container (1) according to claim 1 or 2, wherein the flap (5) has at least one projection (8) on the side facing the at least one interior of the dish (2) and wherein the projection (8) is configured as a buoyancy body.

4. The residual water container (1) according to one of claims 1-3, further comprising at least one counterweight (10), wherein the at least one counterweight (10) is connected to the flap (5) and wherein the at least one counterweight (10) is arranged in relation to the flap (5) and the pivot axis (6) of the flap (5) in such a manner that the counterweight (10) produces a torque (F₃ x d₃) acting on the flap (5) in relation to the pivot axis (6) of the flap, which at least partially compensates for a corresponding torque (F₁ x d₁) produced by a weight force (F1) of the flap (5).

5. The residual water container (1) according to claim 4, wherein the at least one counterweight (10) has at least one second flow surface (11), wherein the at least one second flow surface (11) is configured to have residual water flowing out of the dish (2) when tilting the residual water container (1) flowing onto it and thereby producing a torque acting on the flap (5).

6. The residual water container (1) according to one of claims 1-5, wherein the cover (3) has a platform (4) for placing drinks containers thereon.

7. The residual water container (1) according to claim 6, wherein the platform (4) is arranged on a side of the cover (3) opposite the flap (5).

8. The residual water container (1) according to one of claims 1-7, wherein the dish (2) has a base (21) and a side wall (22), wherein the side wall (22) is configured to run obliquely to the base at least in a partial region (221) .

9. The residual water container (1) according to one of claims 2 to 3, wherein the dish (2) has a base (21) and a side wall (22), wherein the side wall (22) is configured to run obliquely to the base at least in a partial region (221) and wherein the at least one projection (8) is opposite the partial region (221) of the side wall (22), in which the side wall (22) is configured to run obliquely to the base (21).

10. The residual water container (1) according to one of claims 1-9, wherein the cover (3) is detachably connected to the dish (2).

11. The residual water container (1) according to claim 10, wherein the cover (3) is non-positively and/or positively connected to the dish (2).

12. The residual water container (1) according to one of claims 1-11, wherein the flap (5) is attached pivotably to the cover (3) via at least one hinge (7).

13. Apparatus for beverage preparation comprising a beverage preparation unit and a residual water container (1) according to one of claims 1-12.

14. The apparatus according to claim 13, wherein the residual water container (1) can be removed from the apparatus.

15. The apparatus according to one of claims 13 to 14, wherein in one operating state of the apparatus the residual water container (1) is arranged in a lower region of the apparatus and/or wherein the apparatus has at least one beverage outlet opening below which the cover (3) has a platform (4) for placing drinks containers thereon.

16. The apparatus according to one of claims 13 to 15, wherein the apparatus is a coffee machine, a coffee machine for preparing expresso and/or cappuccino, a fully automatic coffee machine or a fully automatic coffee machine for preparing espresso and/or cappuccino.

## Revendications

1. Bac à eau résiduelle (1) pour un dispositif de préparation de boissons, comprenant :
une coque (2) comprenant au moins un espace intérieur destiné à accueillir de l'eau résiduelle et une ouverture délimitée par un bord supérieur (23) de la coque,
un couvercle (3) destiné à recouvrir une première région partielle de l'ouverture de la coque (2), et
un clapet (5) destiné à recouvrir temporairement une deuxième région partielle de l'ouverture de la coque (2),
dans lequel le clapet (5) peut pivoter autour d'un axe de pivotement (6) par rapport à la coque (2),
**caractérisé en ce que**
le clapet (5) peut pivoter entre un état fermé et un état ouvert,
dans lequel, à l'état ouvert, une ouverture de versement (9) du bac à eau résiduelle est dégagée, de l'eau résiduelle pouvant être versée par l'ouverture de versement (9) par le biais du bord supérieur (23) de la coque (2), et
dans lequel, à l'état fermé, l'ouverture de versement (9) est fermée.

2. Bac à eau résiduelle (1) selon la revendication 1, dans lequel le clapet (3) présente au moins une saillie (8) sur un côté tourné vers l'au moins un espace intérieur de la coque (2),
dans lequel l'au moins une saillie (8) présente au moins une première surface d'écoulement (81),
dans lequel l'au moins une première surface d'écoulement (81) est conçue pour recevoir de l'eau résiduelle venant de la coque (2) lors d'un basculement du bac à eau résiduelle (1) et ainsi produire un couple de rotation agissant sur le clapet (5).

3. Bac à eau résiduelle (1) selon la revendication 1 ou 2,
dans lequel le clapet (5) présente au moins une saillie (8) sur un côté tourné vers l'au moins un espace intérieur de la coque (2), et
dans lequel le saillie (8) est conçue comme un flotteur.

4. Bac à eau résiduelle (1) selon l'une des revendications 1 à 3, comprenant en outre au moins un contrepoids (10),
dans lequel l'au moins un contrepoids (10) est relié au clapet (5), et
dans lequel l'au moins un contrepoids (10) est disposé de telle façon par rapport au clapet (5) et à l'axe de pivotement (6) du clapet (5), que le contrepoids (10) produit un couple de rotation (F₃ x d₃) agissant sur le clapet (5) par rapport à l'axe de pivotement (6) du clapet, lequel compense au moins partiellement un couple de rotation (F₁ x d₁) correspondant produit par une force pondérale (F1) du clapet (5).

5. Bac à eau résiduelle (1) selon la revendication 4,
dans lequel l'au moins un contrepoids (10) présente au moins une deuxième surface d'écoulement (11),
dans lequel l'au moins une deuxième surface d'écoulement (11) est conçue pour recevoir de l'eau résiduelle coulant hors de la coque (2) lors d'un pivotement du bac à eau résiduelle (1) et ainsi produire un couple de rotation agissant sur le clapet (5).

6. Bac à eau résiduelle (1) selon l'une des revendications 1 à 5,
dans lequel le couvercle (3) présente une plateforme (4) permettant de poser des récipients de boisson.

7. Bac à eau résiduelle (1) selon la revendication 6,
dans lequel la plateforme (4) est disposée sur un côté du couvercle (3) opposé au clapet (5).

8. Bac à eau résiduelle (1) selon l'une des revendications 1 à 7,
dans lequel la coque (2) présente un fond (21) et une paroi latérale (22),
dans lequel la paroi latérale (22) s'étend de façon oblique par rapport au fond, au moins dans une région partielle (221).

9. Bac à eau résiduelle (1) selon l'une des revendications 2 à 3,
dans lequel la coque (2) présente un fond (21) et une paroi latérale (22),
dans lequel la paroi latérale (22) s'étend de façon oblique par rapport au fond, au moins dans une région partielle (221), et
dans lequel l'au moins une saillie (8) est opposée à la région partielle (221) de la paroi latérale (22), du fait que la paroi latérale (22) s'étend de façon oblique par rapport au fond (21).

10. Bac à eau résiduelle (1) selon l'une des revendications 1 à 9,
dans lequel le couvercle (3) est relié de façon détachable à la coque (2).

11. Bac à eau résiduelle (1) selon la revendication 10,
dans lequel le couvercle (3) est relié à la coque (2) par liaison de force et/ou par complémentarité de forme.

12. Bac à eau résiduelle (1) selon l'une des revendications 1 à 11,
dans lequel le clapet (5) est fixé de façon pivotante au couvercle (3) par au moins une charnière (7).

13. Dispositif pour la préparation de boissons, comprenant
une unité de préparation de boissons, et
un bac à eau résiduelle (1) selon l'une des revendications 1 à 12.

14. Dispositif selon la revendication 13,
dans lequel le bac à eau résiduelle (1) peut être retiré du dispositif.

15. Dispositif selon l'une des revendications 13 à 14,
dans lequel, dans un état de fonctionnement du dispositif, le bac à eau résiduelle (1) est disposé dans une région inférieure du dispositif, et/ou
dans lequel le dispositif présente au moins une ouverture de sortie de boisson, sous laquelle le couvercle (3) présente une plateforme (4) permettant de poser des récipients de boisson.

16. Dispositif selon l'une des revendications 13 à 15,
dans lequel le dispositif est une machine à café, une machine à café pour la préparation d'espresso et/ou de capuccino, une machine à café automatique ou une machine à café automatique pour la préparation d'espresso et/ou de capuccino.
